# EUROPÄISCHE PATENTANMELDUNG

(11) **EP 2 222 074 A1**
(43) Veröffentlichungstag der Anmeldung: **25.08.2010**
(21) Anmeldenummer: 09153236.6
(22) Anmeldetag: 19.02.2009
(51) Int. Cl.: H04N 5/00

(54) **Vorrichtung und Verfahren zur Behandlung von CI-konformen Transportdatenströmen**

(71) Anmelder: Real Invent GmbH, 85716 Unterschleißheim (DE)
(72) Erfinder: Klein, Frédéric, c/o Real Invent GmbH, 85716 Unterschleißheim (DE); Klein, Rüdiger, c/o Real Invent GmbH, 85716 Unterschleißheim (DE)
(74) Vertreter: Kindermann, Peter

(57) **Zusammenfassung**

Die Erfindung betrifft eine Vorrichtung und ein Verfahren zur Behandlung von CI-konformen Transportdatenströmen mit einer Eingangsprozessoreinheit (2) zum Empfangen und Verarbeiten eines CI-basierten Eingangstransportdatenstroms (12) und zum Erzeugen eines rückgeleiteten Transportdatenstroms (14), einer Ausgangsprozessoreinheit (3) zum Empfangen und Verarbeiten des rückgeleiteten Transportdatenstroms (14) und zum Senden eines CI-basierten Ausgangstransportdatenstroms (13). Eine Steuereinheit (4) ist hierbei über externe Konfigurationsdaten (11, 26, 19) konfigurierbar und steuert die Eingangs- und Ausgangsprozessoreinheit (2, 3) entsprechend der Konfiguration an.

## Beschreibung

Die vorliegende Erfindung bezieht sich auf eine Vorrichtung und ein Verfahren zur Behandlung von CI-konformen Transportdatenströmen und insbesondere auf eine Vorrichtung und ein Verfahren zur Analyse, Überwachung und Manipulation von Transportdatenströmen aus einem Common Interface Host.

Digitaler Videorundfunk (Digital Video Broadcasting, DVB) bezeichnet die standardisierten Verfahren zur Übertragung von digitalen Inhalten wie beispielsweise Fernsehen, Radio, Mehrkanalton, sowie interaktive Dienste und weitere Zusatzdienste mittels digitaler Technik. Hierbei können insbesondere auf Grund von Datenkompression (MPEG-2, H.264) im Vergleich zur analogen Fernsehübertragung mehr Programme pro Sendekanal bzw. Bandbreite übertragen werden. Hierbei gibt es eine Vielzahl von unterschiedlichen Übertragungswegen, welche sich hauptsächlich im Modulationsverfahren, der Fehlerkorrektur usw. unterscheiden. Beispiele hierfür sind DVB-S für Satellitenübertragung, DVB-C für die Übertragung über Kabelnetze oder DVB-IPI bzw. DVB-IPTV für die Übertragung über IP-basierte Netzwerke (Internet Protokoll) wie z.B. dem Internet.

DVB-Endgeräte wie beispielsweise sogenannte Set-Top-Boxen, Transmodulatoren einer Kopfstation, Professional Receiver usw. weisen üblicherweise einen sogenannten Common Interface Slot bzw. eine CI-Schnittstelle auf, die gemäß EN50221 festgelegt bzw. standardisiert ist. Unter einem CI-Modul wird in diesem Zusammenhang ein entsprechendes Modul verstanden, welches in einen entsprechenden Common Interface Einschub eingesteckt werden kann, wobei ein CI-konformer Transportdatenstrom vom Modul aufgenommen und auch wieder abgegeben wird. In diesem Zusammenhang sei auch auf sogenannte Conditional Access Modules (CAM) verwiesen, welche gemäß DVB-Standard verschlüsselte Transportdatenströme entschlüsseln können.

Aus der Druckschrift DE102010022249A1 ist ein herkömmlicher Netzwerkadapter für ein derartiges DVB-Empfangsgerät mit einer CI-Schnittstelle bekannt, wobei ferner eine IP-basierte Schnittstelle wie beispielsweise WLAN (Wireless Local Area Network) oder Ethernet unterstützt wird. Der Netzwerkadapter realisiert hierbei eine Anpassung der unterschiedlichen Datenbusbreiten sowie Formate.

Ferner ist aus der Druckschrift DE20220560U1 eine Einrichtung zum Abgreifen und Zuführen von MPEG-2-Transportströmen in DVB-Empfangsgeräten bekannt, wobei eine CI-Schnittstelle sowie eine Bus-Schnittstelle unterstützt werden. Die Bus-Schnittstelle kann hierbei wiederum eine IP-basierte Schnittstelle wie z.B. Ethernet oder WLAN umfassen.

Schließlich offenbart die Druckschrift DE10206052492A1 ein Formatwandlermodul für eine digitale Fernsehempfangseinrichtung sowie ein zugehöriges Verfahren, bei dem ein IP-konfomer Transportdatenstrom in ein herkömmliches DVB-Empfangsgerät eingespeist werden kann.

Demgegenüber liegt der Erfindung die Aufgabe zu Grunde, eine Vorrichtung und Verfahren zur Behandlung von CI-konformen Transportdatenströmen zu schaffen, welche bei geringen Kosten eine hohe Flexibilität aufweisen und eine Vielzahl von Betriebsarten ermöglichen.

Erfindungsgemäß wird diese Aufgabe hinsichtlich der Vorrichtung durch die Merkmale des Patentanspruchs 1 und hinsichtlich der Verfahren durch die Maßnahmen der Patentansprüche 9 bis 12 gelöst.

Insbesondere durch das Aufteilen einer Prozessoreinheit in eine Eingangsprozessoreinheit zum Empfangen und Verarbeiten eines CI-basierten Eingangstransportdatenstroms sowie einer Ausgangsprozessoreinheit zum Senden eines CI-basierten Ausgangstransportdatenstroms sowie einer über externe Konfigurationsdaten konfigurierbaren Steuereinheit zur selektiven Ansteuerung der Eingangsprozessoreinheit sowie der Ausgangsprozessoreinheit können auf einfache Art und Weise eine Vielzahl von unterschiedlichen Betriebsarten realisiert werden.

Vorzugsweise werden die Konfigurationsdaten über eine IP-und/oder CI-Schnittstelle zugeführt, wodurch sich eine Konfigurierbarkeit stark vereinfacht.

Beispielsweise kann eine CI-Treibereinheit einen bitparallelen CI-konformen Eingangstransportdatenstrom in einen bitseriellen CI-basierten Eingangstransportdatenstrom umwandeln, welcher dann der Eingangsprozessoreinheit den zu verarbeitenden Transportdatenstrom zur Verfügung stellt. Eine Weiterverarbeitung der Transportströme kann dadurch besonders einfach realisiert werden. Ferner wird durch die CI-Treibereinheit ein bitserieller CI-basierter Ausgangstransportdatenstrom in einen bitparallelen CI-konformen Ausgangstransportdatenstrom umgewandelt.

Ferner kann eine IP-Sendeeinheit zum Versenden von IP-konformen Ausgangsdaten vorgesehen werden, wobei die IP-Sendeeinheit wiederum von der Steuereinheit in Abhängigkeit der jeweiligen Konfiguration angesteuert wird. Die von der Eingangsprozessoreinheit zur Verfügung gestellten Daten können damit besonders einfach in IP-konforme Ausgangsdaten umgewandelt werden.

Ferner kann die Eingangsprozessoreinheit eine Überwachungseinheit zum Überwachen von zumindest einem Teil des CI-basierten Eingangstransportdatenstroms aufweisen, welche wiederum von der Steuereinheit selektiv ansteuerbar ist. Eine Überwachungs-Betriebsart für die an der CI-Schnittstelle anliegenden Transportdatenströme lässt sich dadurch besonders einfach realisieren.

Ferner kann eine Sendeeinheit, insbesondere ein Infrarotsender, vorgesehen sein, welche wiederum über die konfigurierbare Steuereinheit ansteuerbar ist und beispielsweise eine Umschaltung des an der CI-Schnittstelle anliegenden Transportdatenstroms ermöglicht. Auf diese Weise lässt sich auch eine dynamische Überwachung des Transportdatenstroms realisieren.

Ferner kann eine IP-Empfangseinheit zum Empfangen von IP-konformen Eingangsdaten vorhanden sein, wobei die IP-Empfangseinheit wiederum von der Steuereinheit ansteuerbar ist. Gemeinsam mit der IP-Sendeeinheit sowie den Ein- und Ausgangsprozessoreinheiten lässt sich dadurch ein vollständiges oder zumindest teilweises Abgreifen von Transportdatenströmen und Weiterleiten als IP-konforme Ausgangsdaten realisieren, welche beispielsweise von einem externen Gerät modifiziert werden können, um sie anschließend wieder als IP-konforme Eingangsdaten einzuspeisen und dem CI-Host mit der CI-Schnittstelle zuzuführen.

In den weiteren Ansprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:
Figur 1 ein vereinfachtes Blockschaltbild der erfindungsgemäßen Vorrichtung zur Behandlung von CI-konformen Transportdatenströmen, und
Figur 2 eine vereinfachte Darstellung zur Veranschaulichung einer Teilfunktion von Figur 1.

Die Erfindung wird nachfolgend beispielhaft anhand eines CI-Moduls beschrieben, in welchem die erfindungsgemäße Vorrichtung integriert bzw. vollständig implementiert sein kann. Hierbei werden als IP-konforme Aus- und Eingangsdaten Daten gemäß DVB-IPTV-Standard verwendet, während der CI-konforme Transportdatenstrom beispielsweise gemäß DVB-CI-Standard vorliegt. Selbstverständlich sind auch beliebig andere CI-konforme Transportdatenströme sowie IP-konforme Daten denkbar.

Gemäß der vorliegenden Erfindung besteht die Möglichkeit ein CI-Modul für eine Vielzahl von unterschiedlichen Betriebsarten bzw. Betriebsmodi über externe Konfigurationsdaten zu konfigurieren bzw. festzulegen. Insbesondere wird hierbei auf die Betriebsart der statischen oder dynamischen Fernüberwachung eingegangen, wodurch eine Diagnose eines Transportdatenstroms auf einer CI-Schnittstelle möglich ist. Auf diese Weise ist es möglich, im gesamten Frequenzband übertragene Transpörtdätenströme, moduliert in einem Kanalraster, aus der Ferne oder lokal zu analysieren und zu überwachen. Die Einsetzbarkeit eines derartigen Betriebsmodus sind beispielsweise Kopfstationen (Head-End Stations) oder wichtige Knotenpunkte in der Peripherie von Kabelnetzen.

Ein weiterer Einsatzbereich der vorliegenden Erfindung liegt in der Möglichkeit, dass unter vordefinierten Überwachungskriterien selbstständig Alarmmeldungen versendet werden können. So können aktiv Störungen von Transportdatenströmen an z.B. vorstehend genannten Orten gemeldet und aktiv behandelt werden.

Ein weiterer Anwendungsfall ist der Einsatz in Kopfstationen, um beispielsweise Transportdatenströme einer gezielten Manipulation in einfacher Weise zu unterziehen. Hierbei erfolgt ein vollständiger oder teilweiser Export bzw. Abgriff des Transportdatenstroms in ein IP-Netzwerk mit anschließender Rückführung des manipulierten bzw. veränderten Transportdatenstroms in die CI-Schnittstelle bzw. einen Common Interface Host, wie beispielsweise eine Set-Top-Box, ein Transmodulator einer Kopfstation, ein Professional Receiver usw.

Die Erfindung ermöglicht hierbei auf besonders einfache und kostengünstige Art und Weise die vorstehend beschriebenen Anwendungsfälle mit nur einer einzigen Vorrichtung bzw. in einem einzigen CI-Modul zu realisieren, um auf flexible Art und Weise Transportdatenströme zu analysieren, zu überwachen und manipulieren zu können. Die Vorrichtung ist hierbei in allen ihren Funktionen vollständig von außen in Echtzeit steuerbar. Sie ist somit dynamisch und könnte damit ein Glied eines komplexen Systems für Transportdatenströme insbesondere in Kopfstationen von Kabelnetzwerken sein.

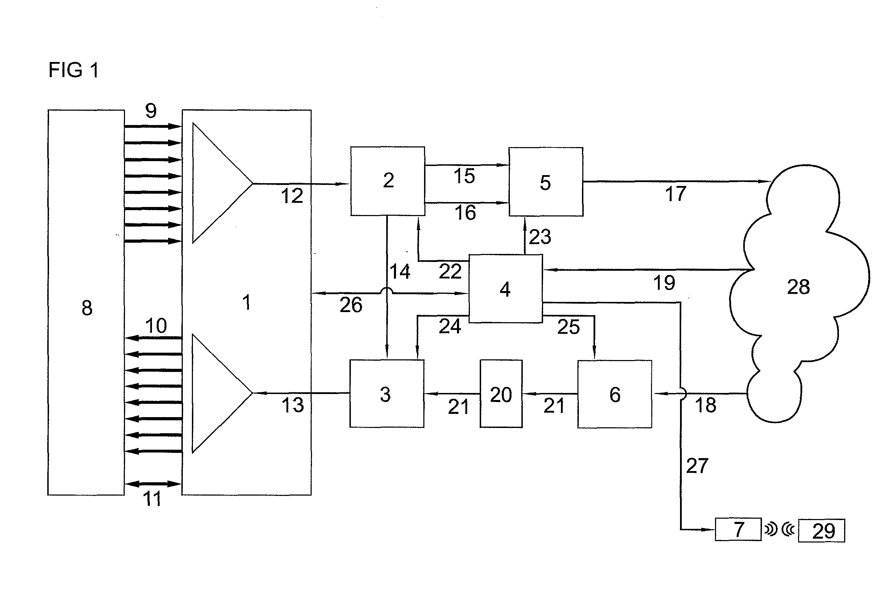

Figur 1 zeigt ein vereinfachtes Blockschaltbild der Vorrichtung zur Behandlung von CI-konformen Transportdatenströmen, welche beispielsweise in einem CI-Modul integriert ist.

Gemäß Figur 1 wird die Vorrichtung über eine CI-Schnittstelle 9, 10 und 11 an einen Common Interface Host 8 angeschlossen, der beispielsweise ein DVB-Empfangsgerät, wie z.B. eine Set-Top-Box, darstellt. Die CI-Schnittstelle weist hierbei einen bitparallelen CI-konformen Eingangstransportdatenstrom 9 mit einer Datenbreite von 8 Bit sowie einen bitparallelen CI-konformen Ausgangstransportdatenstrom 10 mit ebenfalls einer Datenbreite von 8 Bit auf. Ferner besitzt die CI-Schnittstelle (nicht dargestellte) Adressleitungen sowie eine CI-Steuerleitung 11, über die ein Informationsaustausch organisiert wird.

Gemäß Figur 1 kann eine CI-Treibereinheit 1 zur Realisierung der CI-Schnittstelle auf Seiten des CI-Moduls vorgesehen sein, wobei der bitparallele CI-konforme Eingangstransportdatenstrom 9 in einen bitseriellen CI-basierten Transportdatenstrom 12 umgewandelt wird, der jedoch ansonsten vollständig auf den bitparallelen CI-konformen Daten 9 basiert. In gleicher Weise kann ein bitserieller CI-basierter Ausgangstransportdatenstrom 13 in einen bitparallelen CI-konformen Ausgangstransportdatenstrom 10 umgewandelt werden. Obwohl die CI-Treibereinheit 1 eine starke Vereinfachung der vorliegenden Erfindung aufgrund der nunmehr seriellen Daten ermöglicht, ist grundsätzlich auch die direkte Weiterverarbeitung der bitparallelen CI-konformen Transportdatenströme 9 und 10 denkbar.

Gemäß Figur 1 kann die Vorrichtung ferner eine Eingangsprozessoreinheit 2 zum Empfangen und Verarbeiten des CI-basierten Eingangstransportdatenstroms 12 und zum Erzeugen eines rückgeleiteten Transportdatenstroms 14 zu einer Ausgangsprozessoreinheit 3 aufweisen. Die Ausgangsprozessoreinheit 3 empfängt und verarbeitet den rückgeleiteten Transportdatenstrom 14 und sendet ihrerseits einen CI-basierten Ausgangstransportdatenstrom 13 zur CI-Treibereinheit 1, sofern vorhanden.

Ferner kann gemäß Figur 1 eine Steuereinheit 4 zum selektiven Ansteuern der Eingangsprozessoreinheit 2 über ein erstes Steuersignal 22 sowie der Ausgangsprozessoreinheit 3 über ein zweites Steuersignal 24 angeordnet sein. Die Steuereinheit 4 ist über externe Konfigurationsdaten 19 oder 26 konfigurierbar und ermöglicht gemeinsam mit den für die CI-Schnittstelle aufgeteilten Prozessoreinheiten 2 und 3 sowie der dazwischen liegenden Transportdatenstromverbindung 14 den Grundstein für die Realisierung einer Vielzahl von unterschiedlichen Betriebsarten bzw. -modi.

Die Konfigurationsdaten können hierbei als IP-konforme (Internet Protokoll) Konfigurationsdaten 19 über eine IP-Schnittstelle von einem IP-basierten Netzwerk 28, wie beispielsweise dem Internet, zugeführt werden. Dies ermöglicht eine äußerst flexible Konfiguration des CI-Moduls von nahezu jedem Ort der Welt, sofern ein Zugang zu dem IP-Netzwerk 28 existiert. Alternativ oder zusätzlich können Konfigurationsdaten aber auch als CI-konforme Konfigurationsdaten über die CI-Schnittstelle zugeführt werden, wobei sie im Wesentlichen über die CI-Steuersignalleitung 11 zunächst an die CI-Treibereinheit 1 und von dort über die Steuer- und Konfigurationssignalleitung 26 an die Steuereinheit 4 weitergegeben werden. In diesem Fall ist auch eine Rückmeldung von der Steuereinheit 4 in umgekehrter Richtung z.B. zum Common Interface Host 8 möglich.

Die konfigurierbare Steuereinheit 4 steuert demzufolge alle logischen Einheiten des CI-Moduls in Abhängigkeit von ihrer jeweiligen Konfiguration. Die Konfiguration der Steuereinheit 4 kann insbesondere auch über ein sogenanntes On Screen Menue am Common Interface Host 8 über die Steuersignalleitung 11 sowie über die Steuer- und Konfigurationssignalleitung 26 durchgeführt werden. Eine Konfiguration über die IP-konformen Konfigurationsdaten 19 kann beispielsweise durch eine sogenannte Mensch-Maschinen-Schnittstelle ermöglicht werden, wie beispielsweise eine Webseite. Alternativ sind auch Konfigurations-APIs möglich (Application Programming Interface).

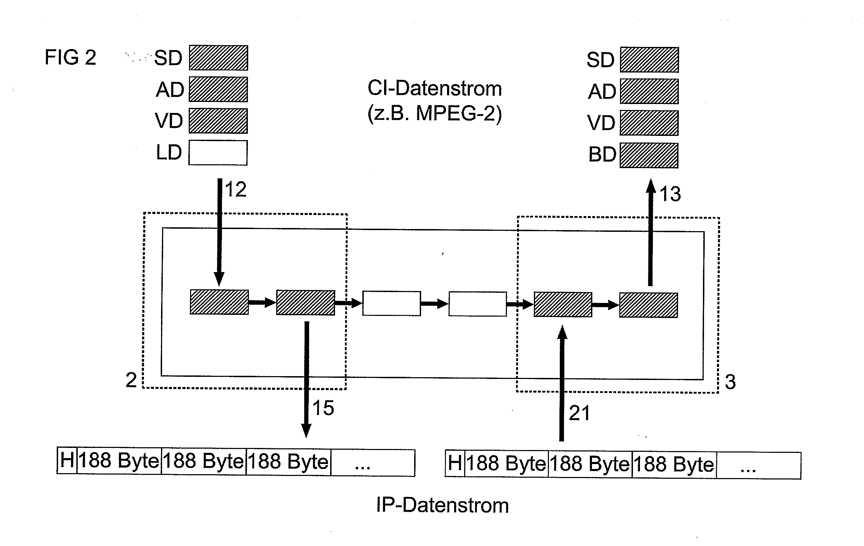

Zur Veranschaulichung der Funktionsweise insbesondere der Prozessoreinheiten 2 und 3 wird nachfolgend auf Figur 2 verwiesen. Gemäß Figur 2 werden über den CI-basierten Eingangstransportdatenstrom 12 beispielsweise MPEG-2-Datenpakete mit 188 Bytes seriell zugeführt. Die Datenpakete können hierbei Audiodaten AD, Videodaten VD, sonstige Daten SD und/oder Leerdaten LD aufweisen. Zwischen der Eingangsprozessoreinheit 2 und der Ausgangsprozessoreinheit 3 existiert ein Verbindungsdatenstrom bzw. rückgeleiteter Transportdatenstrom, mit dem über eine endlose Folge von sogenannten Containern die eingehenden Datenpakete abgelegt und zur Ausgangsprozessoreinheit 3 transportiert werden können. Dadurch kann auch eine Synchronisierung des eingehenden Transportdatenstroms 12 mit dem ausgehenden Transportdatenstrom 13 ermöglicht werden. In Abhängigkeit vom ersten und zweiten Steuersignal 22 und 24 besitzen die Eingangs- und Ausgangsprozessoreinheiten 2 und 3 ferner die Möglichkeit auf die in den Containern abgelegten Pakete zuzugreifen und z.B. eine Auswertung der Dateninhalte bis hin zu einer Modifikation oder vollständigen Ersetzung der Datenpakete durch z.B. sogenannte Leerdaten LD bzw. NullPakete durchzuführen. Eine derartige Verarbeitung kann hierbei auf den gesamten Transportdatenstrom angewendet werden oder nur auf einen Teil des Transportdatenstroms wie beispielsweise nur auf Video- oder Audiodaten VD oder AD. Dadurch lassen sich in Abhängigkeit von den Steuersignalen 22 und 24 bereits eine Vielzahl von Betriebsarten realisieren.

Beispielsweise kann ein von der Eingangsprozessoreinheit 2 abgegriffener CI-basierter Export-Transportdatenstrom 15 dadurch erzeugt werden, dass die Datenpakte den jeweiligen Containern entnommen und dafür Leerdaten LD eingefügt werden. Alternativ können aber die in den Containern befindlichen Datenpakete lediglich kopiert werden, um die Originaldatenpakete in den Containern zu belassen. In ähnlicher Weise kann dann in der Ausgangsprozessoreinheit 3 ein CI-basierter Import-Transportdatenstrom 21 bzw. dessen Datenpakete in jeweils ankommende leere Container eingefüllt werden, um so den CI-basierten Ausgangstransportdatenstrom 13 zu erzeugen. Leerdaten LD stellen hierbei leere Container dar und können neu befüllt werden.

Wie aus Figur 2 leicht ersichtlich ist, können bei entsprechender selektiver Ansteuerung der Eingangsprozessoreinheit 2 sowie der Ausgangsprozessoreinheit 3 die vorstehend beschriebenen Betriebsarten auf besonders einfache und kostengünstige Weise realisiert werden. Insbesondere kann dadurch ein CI-konformer Transportdatenstrom analysiert, überwacht und gezielt verändert werden.

Nachfolgend sollen die vom vorliegenden CI-Modul realisierbaren Betriebsarten näher beschrieben werden.

Allen Betriebsarten ist hierbei eine Initialisierungsphase gemein, wobei sich das CI-Modul mittels einer vorgegebenen Steuersignalsequenz über die CI-Steuersignalleitung 11 am Common Interface Host 8 anmeldet. Hierbei kann eine Signalisierung bzw. ein Handshake zwischen den (nicht dargestellten) Mikroprozessoren des Common Interface Host 8 sowie der CI-Treibereinheit 1 erfolgen. Der CI-konforme Eingangstransportdatenstrom 9 wird hierbei bitparallel aus dem Common Interface Host 8 über die CI-Treibereinheit 1 in einen CI-basierten bitseriellen Eingangstransportdatenstrom 12 umgewandelt und der Eingangsprozessoreinheit 2 zugeführt.

### Betriebsmodus 1

In einem Betriebsmodus 1 kann ein Abgreifen und Export eines Transportdatenstroms durchgeführt werden. Ferner können gefilterte Komponenten des Transportdatenstroms abgegriffen und exportiert werden. Dieses ermöglicht insbesondere eine Analyse eines CI-konformen Transportdatenstroms.

Gemäß Figur 2 wird die Eingangsprozessoreinheit 2 von der in dieser Betriebsart konfigurierten Steuereinheit 4 mittels des ersten Steuersignals 22 derart angesteuert, dass der CI-basierte Eingangstransportdatenstrom 12 vollständig und unverändert über den rückgeleiteten Transportdatenstrom 14 an die Ausgangsprozessoreinheit 3 weitergeleitet wird. Zusätzlich können Teile bzw. Komponenten oder der gesamte Transportdatenstrom entsprechend der Konfiguration aus der Steuereinheit 4 abgegriffen bzw. kopiert und als CI-basierter Export-Transportdatenstrom 15 ausgegeben werden.

Beispielsweise kann gemäß Figur 1 eine IP-Sendeeinheit 5 zum Versenden von IP-konformen Ausgangsdaten 17 vorgesehen sein, welche ebenfalls von der Steuereinheit 4 über ein drittes Steuersignal 23 angesteuert werden kann. Beispielsweise können MPEG-2-Datenpakete mit je 188 Bytes aus dem CI-basierten Datenstrom in einen IP-konformen Datenstrom umgepackt werden, in dem eins oder mehrere der 188 Byte-Datenpakete einen zusätzlichen IP-Header H erhalten (siehe Figur 2). Vorzugsweise versendet die IP-Sendeeinheit 5 einen DVB-IPTV-konformen Datenstrom an das IP-Netzwerk 28, welches z.B. das Internet sein kann. Die so versendeten IP-konformen Ausgangsdaten 17 können über ein beliebiges am IP-Netzwerk 28 angeschlossenes Endgerät ausgewertet bzw. analysiert werden. Die Ausgangsprozessoreinheit 3 kann von der Steuereinheit 4 gemäß ihren Konfigurationsdaten derart angesteuert werden, dass sie den rückgeleiteten Transportdatenstrom 14 unverändert als CI-basierten Ausgangstransportdatenstrom 13 in bitserieller Form an die CI-Treibereinheit 1 weiterleitet. Der CI-basierte Ausgangstransportdatenstrom 13 kann anschließend in einen bitparallelen CI-konformen Ausgangstransportdatenstrom 10 umgewandelt und zur weiteren Verarbeitung an den Common Interface Host 8 weitergeleitet werden.

### Betriebsmodus 2

In einer zweiten Betriebsart kann ein Export eines CI-konformen Transportdatenstroms zum Zwecke der Manipulation bzw. Veränderung mit anschließender Rückführung an den Common Interface Host durchgeführt werden. Hierbei können auch nur Teile bzw. Komponenten des Transportdatenstroms exportiert oder gefiltert werden.

Gemäß dieser Betriebsart kann die Steuereinheit 4 über die externen Konfigurationsdaten derart konfiguriert werden, dass eine Ansteuerung der logischen Einheiten des CI-Moduls wie folgt durchgeführt wird. Die Steuereinheit 4 kann hierbei über das erste Steuersignal 22 die Eingangsprozessoreinheit 2 derart ansteuern, dass der gesamte CI-basierte Eingangstransportdatenstrom 12 oder nur Teile hiervon als CI-basierter Export-Transportdatenstrom 15 an die IP-Sendeeinheit 5 weitergeleitet wird. Die aus den Containern entnommenen Datenpakete können beispielsweise in Form von Nullpaketen bzw. Leerdaten LD über den rückgeleiteten Transportdatenstrom 14 an die Ausgangsprozessoreinheit 3 geleitet werden (siehe Figur 2). Die Datenrate des Transportdatenstroms kann dadurch unverändert aufrechterhalten werden. Die ebenfalls durch die Steuereinheit 4 über das dritte Steuersignal 23 angesteuerte IP-Sendeeinheit 5 wandelt nunmehr den CI-basierten Export-Transportdatenstrom 15 in IP-konforme Ausgangsdaten und versendet die entsprechenden Datenpakete in das IP-Netzwerk 28 (z.B. Internet).

Ein in Figur 1 nicht dargestelltes IP-Endgerät kann nunmehr die so erhaltenen IP-konformen Ausgangsdaten 17 empfangen und entsprechend manipulieren oder verändern. Insbesondere kann hierbei eine Verschlüsselung oder Entschlüsselung der Nutzdaten durchgeführt werden. Ferner kann hierbei eine IPgestützte Neucodierung oder sonstige Veränderung der über das IP-Netzwerk 28 enthaltenen Nutzdaten durchgeführt werden. Dadurch können fern oder lokal ein Software Update durchgeführt werden oder z.B. der CI-Host 8 neugestartet werden.

Derartige manipulierte oder veränderte Nutzdaten können nunmehr als IP-konforme Eingangsdaten 18 an einer IP-Empfangseinheit 6 zugeführt werden. Beispielsweise werden an der IP-Empfangseinheit 6 DVB-IPTV-Daten empfangen und in einen CI-basierten Import-Transportdatenstrom 21 umgewandelt. Wiederum kann auch die IP-Empfangseinheit 6 von der Steuereinheit 4 über ein viertes Steuersignal 25 angesteuert werden, um beispielsweise eine Auswahl der Formatumwandlung durchzuführen. Der CI-basierte Import-Transportdatenstrom 21 kann beispielsweise einem Zwischenspeicher 20 bzw. einer Puffereinheit zum Zwischenspeichern zugeführt werden. Die Ausgangsprozessoreinheit 3 kann in dieser Betriebsart von der Steuereinheit 4 derart angesteuert werden, dass der rückgeleitete Transportdatenstrom 14 nun entsprechend der Eingangsbitrate aufgefüllt wird. Genauer gesagt werden die im rückgeleiteten Transportdatenstrom enthaltenen Nullpakete bzw. Container mit Leerdaten LD durch die in der Puffereinheit 20 zwischengespeicherten Datenpakete ersetzt, sofern dort Daten zur Auslieferung vorhanden sind. Anschließend sendet die Ausgangsprozessoreinheit 3 den aus rückgeleitetem und Import-Transportdatenstrom zusammengesetzten Transportdatenstrom als bitseriellen CI-basierten Ausgangstransportdatenstrom 13 zur CI-Treibereinheit 1, in der er wiederum in einen bitparallelen CI-konformen Ausgangstransportdatenstrom 10 zurückgewandelt wird und dem Common Interface Host 8 zur weiteren Verarbeitung und/oder Verwendung zugeführt wird.

### Betriebsmodus 3

In dieser Betriebsart kann eine eigenständige Überprüfung eines CI-konformen Transportdatenstroms zum Zwecke der statischen oder dynamischen Überwachung durchgeführt werden.

Wiederum kann die Steuereinheit 4 beispielsweise über IP-konforme Konfigurationsdaten 19 und/oder CI-konforme Konfigurationsdaten der Konfigurationssignalleitung 26 in Verbindung mit einem Steuersignal über die CI-Steuersignalleitung 11 in diese dritte Betriebsart konfiguriert werden. Die Eingangsprozessoreinheit 2 kann hierbei von der Steuereinheit 4 über das erste Steuersignal 22 derart angesteuert werden, dass der CI-basierte Ausgangstransportdatenstrom 12 beispielsweise unverändert und vollständig über den rückgeleiteten Transportdatenstrom 14 an die Ausgangsprozessoreinheit 3 geleitet wird. Zusätzlich kann der CI-basierte Transportdatenstrom 12 ganz oder zumindest teilweise bzw. in Komponenten entsprechend der Konfiguration der Steuereinheit 4 überwacht werden.

Genauer gesagt können bestimmte Alarmbedingungen entsprechend der Konfiguration der Steuereinheit 4 festgelegt werden, welche ein oder mehrere Alarmsignale 16 erzeugen, die wiederum an die IP-Sendeeinheit 5 weitergeleitet werden können. Die ebenfalls durch die Steuereinheit 4 über das dritte Steuersignal 23 entsprechend angesteuerte IP-Sendeeinheit 5 wandelt dieses zumindest eine Alarmsignal 16 in zumindest ein entsprechendes IP-basiertes Alarmsignal um, welches wiederum als IP-konforme Ausgangsdaten 17 dem IP-Netzwerk 28 zugeführt wird und von einem (nicht dargestellten) IP-Endgerät ausgewertet werden kann. Vorzugsweise sendet die Ausgangsprozessoreinheit 3 in dieser Betriebsart wiederum von der Steuereinheit 4 über das zweite Steuersignal 24 angesteuert den rückgeleiteten Transportdatenstrom 14 unverändert und in serieller Form als CI-basierten Ausgangstransportdatenstrom 13 zum CI-Treiber 1, wo er in parallele Form umgewandelt wird und als CI-konformer Ausgangstransportdatenstrom 10 zur weiteren Verarbeitung an den Common Interface Host 8 ausgegeben wird. Diese Betriebsart ermöglicht somit eine eigenständige statische Überwachung bezogen auf einen voreingestellten CIkonform übergebenen Transportdatenstrom.

Es ist jedoch auch eine eigenständige dynamische Überwachung gemäß der vorliegenden Erfindung möglich, wobei ferner eine Sendeeinheit 7 notwendig ist. Die Sendeeinheit 7 kann insbesondere einen Infrarot-Sender darstellen, der wiederum von der Steuereinheit 4 über ein fünftes Steuersignal 27 angesteuert werden kann. Die Sendeeinheit 7 korrespondiert hierbei mit einer Empfangseinheit 29, welche dem Common Interface Host zugeordnet ist. Insbesondere Set-Top-Boxen weisen üblicherweise eine derartige Empfangseinheit 29 in Form eines Infrarot-Empfängers auf, wodurch über eine (nicht dargestellte) Fernbedienungseinrichtung üblicherweise eine Ansteuerung und insbesondere eine Kanalauswahl erfolgen kann. Diesen Umstand macht sich die vorliegende Erfindung in der modifizierten dritten Betriebsart zu Nutze, wobei die Sendeeinheit 7 von der entsprechend konfigurierten Steuereinheit 4 derart angesteuert wird, dass sie beispielsweise eine entsprechende Kanalauswahl am Common Interface Host 8 durchführt und somit eine Umschaltung des CI-konformen Transportdatenstroms ermöglicht.

Diese weitere Betriebsart kann auch mit den ersten beiden Betriebsarten kombiniert werden, wodurch sich auf äußerst komfortable Art und Weise ein zu analysierender oder zu manipulierender CI-konformer Transportdatenstrom auswählen bzw. umschalten lässt. Vorzugsweise erfolgt hierbei die Konfiguration der Steuereinheit 4 über die IP-konformen Konfigurationsdaten 19 oder die CI-konformen Konfigurationsdaten 26 derart, dass eine unmittelbare Auswahl eines jeweiligen Kanals oder Transportdatenstroms über die Steuereinheit 4 möglich ist.

Die Erfindung wurde vorstehend an Hand eines CI-Moduls mit einem DVB-IPTV-konformen Datenstrom beschrieben. Sie ist jedoch nicht darauf beschränkt und umfasst auch andere IP-konforme Datenströme.

Bezugszeichenliste
- 1: CI-Treibereinheit
- 2: Eingangsprozessoreinheit
- 3: Ausgangsprozessoreinheit
- 4: Steuereinheit
- 5: IP-Sendeeinheit
- 6: IP-Empfangseinheit
- 7: Sendeeinheit
- 8: Common Interface Host
- 9: CI-konformer Eingangstransportdatenstrom
- 10: CI-konformer Ausgangstransportdatenstrom
- 11: CI-Steuersignalleitung
- 12: CI-basierter Eingangstransportdatenstrom
- 13: CI-basierter Ausgangstransportdatenstrom
- 14: rückgeleiteter Transportdatenstrom
- 15: CI-basierter Export-Transportdatenstrom
- 16: Alarmsignal
- 17: IP-konforme Ausgangsdaten
- 18: IP-konforme Eingangsdaten
- 19: IP-konforme Konfigurationsdaten
- 20: Puffereinheit
- 21: CI-basierter Import-Transportdatenstrom
- 22: erstes Steuersignal
- 23: drittes Steuersignal
- 24: zweites Steuersignal
- 25: viertes Steuersignal
- 26: CI-konforme Steuer- und Konfigurationssignalleitung
- 27: fünftes Steuersignal
- 28: IP-Netzwerk
- 29: Empfangseinheit des Common Interface Host
- SD: sonstige Daten
- AD: Audiodaten
- VD: Videodaten
- LD: Leerdaten
- BD: neu befüllte Daten
- H: Header eines IP-Pakets

## Patentansprüche

1. Vorrichtung zur Behandlung von CI-konformen Transportdatenströmen mit:
einer Eingangsprozessoreinheit (2) zum Empfangen und Verarbeiten eines CI-basierten Eingangstransportdatenstroms (12) und zum Erzeugen eines rückgeleiteten Transportdatenstroms (14);
einer Ausgangsprozessoreinheit (3) zum Empfangen und Verarbeiten des rückgeleiteten Transportdatenstroms (14) und zum Senden eines CI-basierten Ausgangstransportdatenstroms (13); und
einer Steuereinheit (4) zum Ansteuern der Eingangsprozessoreinheit (2) sowie der Ausgangsprozessoreinheit (3), wobei die Steuereinheit (4) über externe Konfigurationsdaten (11, 26, 19) konfigurierbar ist.

2. Vorrichtung nach Patentanspruch 1, wobei die Konfigurationsdaten (11, 26, 19) über eine IP- und/oder CI-Schnittstelle zuführbar sind.

3. Vorrichtung nach Patentanspruch 1 oder 2, mit einer CI-Treibereinheit (1) zum Umwandeln eines bitparallelen CI-konformen Eingangstransportdatenstroms (9) in einen bitseriellen CI-basierten Eingangstransportdatenstrom (12) und zum Umwandeln eines bitseriellen CI-basierten Ausgangstransportdatenstroms (13) in einen bitparallelen CI-konformen Ausgangstransportdatenstrom (10).

4. Vorrichtung nach einem der Patentansprüche 1 bis 3, mit einer IP-Sendeeinheit (5) zum Versenden von IP-konformen Ausgangsdaten (17), die von der Steuereinheit (4) ansteuerbar ist.

5. Vorrichtung nach einem der Patentansprüche 1 bis 4, wobei die Eingangsprozessoreinheit (2) eine Überwachungseinheit zum Überwachen von zumindest einem Teil des CI-basierten Eingangstransportdatenstroms (12) aufweist, die von der Steuereinheit (4) ansteuerbar ist.

6. Vorrichtung nach einem der Patentansprüche 1 bis 5, mit einer IP-Empfangseinheit (6) zum Empfangen von IP-konformen Eingangsdaten (18), die von der Steuereinheit (4) ansteuerbar ist.

7. Vorrichtung nach einem der Patentansprüche 1 bis 6, mit einer Sendeeinheit (7), insbesondere einem Infrarot-Sender, die von der Steuereinheit (4) ansteuerbar ist.

8. Vorrichtung nach einem der Patentansprüche 6 oder 7, mit einer Puffereinheit (20) zum Zwischenspeichern eines von der IP-Empfangseinheit (6) ausgegebenen Import-Transportdatenstroms (21).

9. Verfahren zur Behandlung von CI-konformen Transportdatenströmen mit einer Vorrichtung gemäß Patentanspruch 4, wobei
die Steuereinheit (4) derart konfiguriert ist, dass sie die Eingangsprozessoreinheit (2), die Ausgangsprozessoreinheit (3) sowie die IP-Sendeeinheit (5) in einen Betriebsmodus ansteuert, bei dem der CI-basierte Eingangstransportdatenstrom (12) unverändert als CI-basierter Ausgangstransportdatenstrom (13) ausgegeben wird und ferner eine Kopie von zumindest einem Teil des CI-basierten Eingangstransportdatenstroms (12) über die IP-Sendeeinheit (5) als IP-konforme Ausgangsdaten (17) ausgegeben wird.

10. Verfahren zur Behandlung von CI-konformen Transportdatenströmen mit einer Vorrichtung gemäß Patentanspruch 4 und 5, wobei
die Steuereinheit (4) derart konfiguriert ist, dass sie die Überwachungseinheit, die Eingangsprozessoreinheit (2), die Ausgangsprozessoreinheit (3) sowie die IP-Sendeeinheit (5) in einem Betriebsmodus ansteuert, bei dem der CI-basierte Eingangstransportdatenstrom (12) unverändert als CI-basierter Ausgangstransportdatenstrom (13) ausgegeben wird und die Überwachungseinheit zumindest einen Teil des CI-basierten Eingangstransportdatenstroms (12) hinsichtlich vorgegebener Alarm-Bedingungen überwacht, wobei bei Erfüllen zumindest einer der Alarm-Bedingungen zumindest ein Alarmsignal (16) an die IP-Sendeeinheit (5) ausgegeben und von dieser als IP-basiertes Alarmsignal versendet wird.

11. Verfahren zur Behandlung von CI-konformen Transportdatenströmen mit einer Vorrichtung gemäß Patentanspruch 7, wobei
die Steuereinheit (4) derart konfiguriert ist, dass sie die Sendeeinheit (7) in einem Betriebsmodus ansteuert, bei dem ein Kanal-Auswahlsignal zum Auswählen eines CI-basierten Eingangstransportdatenstroms (12) für einen korrespondierenden Common Interface Host (8) ausgesendet wird.

12. Verfahren zur Behandlung von CI-konformen Transportdatenströmen mit einer Vorrichtung gemäß Patentanspruch 4 und 6, wobei
die Steuereinheit (4) derart konfiguriert ist, dass sie die Eingangsprozessoreinheit (2), die Ausgangsprozessoreinheit (3), die IP-Sendeeinheit (5) sowie die IP-Empfangseinheit (6) in einem Betriebsmodus ansteuert, bei dem zumindest ein Teil des CI-basierten Eingangstransportdatenstroms (12) zur IP-Sendeeinheit (5) geleitet wird und als IP-konforme Ausgangsdaten (17) ausgegeben wird und bei dem IP-konforme Eingangsdaten (18) von der IP-Empfangseinheit (6) empfangen und zur Ausgangsprozessoreinheit (3) geleitet werden, wobei der rückgeleitete Transportdatenstrom (14) mit empfangenen Daten der IP-Empfangseinheit (6) aufgefüllt wird und als CI-basierter Ausgangstransportdatenstrom (13) ausgegeben wird.

13. Vorrichtung oder Verfahren nach einem der Patentansprüche 1 bis 12, wobei der CI-konforme Transportdatenstrom einen Transportdatenstrom gemäß DVB-CI-Standard darstellt.

14. Vorrichtung oder Verfahren nach einem der Patentansprüche 4 bis 12, wobei die IP-konformen Daten Datensignale gemäß DVB-IPTV-Standard darstellen.

15. Vorrichtung nach einem der Patentansprüche 1 bis 8, wobei es in einem CI-Modul integriert ist.
